# EUROPEAN PATENT SPECIFICATION

(11) **EP 1 063 857 B1**
(45) Date of publication and mention of the grant of the patent: **09.01.2008**
(21) Application number: 00113387.5
(22) Date of filing: 23.06.2000
(51) Int. Cl.: H04Q 7/22, H04M 1/725

(54) **Apparatus for controlling the short message service of a digital mobile station and method therefor**
Anordnung und Verfahren zum Steuern des Kurznachrichtdienstes einer digitalen Mobilstation
Appareil et procédé pour gérer le service des messages court d'une station mobile numérique

(30) Priority: 24.06.1999 KR 9924000
(43) Date of publication of application: 27.12.2000
(73) Proprietor: SAMSUNG ELECTRONICS CO., LTD., Suwon-City, Kyungki-do (KR)
(72) Inventor: Sim, Seng-Wook c/o SAMSUNG ELECTRONICS CO., LTD., Pundang-Gu Sungnam-Shi, Kyunggi-Do (KR); Park, Joung-Kyou, Kwonson-gu, Suwon-shi, Kyonggi-do (KR)
(74) Representative: Grünecker, Kinkeldey, Stockmair & Schwanhäusser Anwaltssozietät

(56) References cited:
- EP-A- 0 748 139

## Description

The present invention relates to an apparatus for controlling the short message service (SMS) of a digital mobile station, and method therefore.

The conventional digital mobile phone usually provides the user with the SMS function through which short character messages may be exchanged other than the ordinary voice communications. The SMS function has been achieved by proper modification of the digital mobile communications system. Of course, the digital mobile station has been provided with a device for editing, inputting and sending the short message for that purpose. However, the conventional SMS function may provide only one-way transmission of the short message, so that the sender and receiver cannot reciprocate short messages with each other in real time as in the two-way voice communications.

EP 0 748 139 A2 discloses a communication system for transmitting text messages to a mobile terminal in a radio telephone network. A local mobile terminal is coupled to an external computer which is used to generate, manipulate and optionally store text messages which can be transmitted or received over the radio telephone network via the local mobile terminal.

It is the object of the present invention to provide an apparatus for controlling the SMS function of a digital mobile station, which enables both the sender and receiver to reciprocate short messages with each other in real time. This object is solved by the subject matter of the independent claims. Preferred embodiments are defined in the dependent claims.

According to an aspect of the present invention, an apparatus for controlling the SMS of a digital mobile station, comprises a display with a message screen, a distinction message detector for detecting a predefined distinction message contained in a received message, and a control unit for dividing the message screen into different display regions if the distinction message is detected, and for causing the received message to be displayed on a selected one of the different display regions.

The present invention will now be described more specifically with reference to the drawings attached only by way of example.
Fig. 1 is a block diagram for illustrating an apparatus for controlling the SMS of a digital mobile station according to the present invention;
Fig. 2 is a flow chart for illustrating a method for controlling the SMS of a digital mobile station according to an embodiment of present invention;
Fig. 3 is a flow chart for illustrating a method for controlling the SMS of a digital mobile station according to another embodiment of present invention; and
Fig. 4 is a block diagram for illustrating the changing phases of the message screens of both sender and receiver in a two-way dialogues SMS according to the present invention.

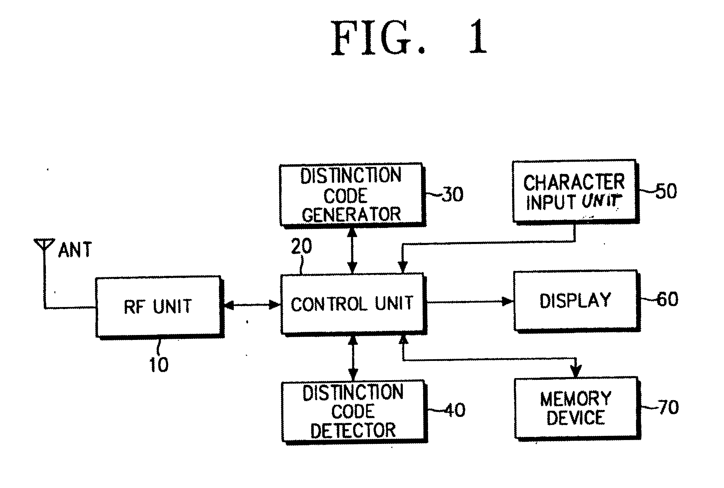

Fig. 1 is a schematic block diagram of the structure of a digital mobile station provided with the inventive SMS function, where the DTMF (dual tone multi-frequency) circuit and vocoder are omitted as not constituting the essential elements of the invention in order to clarify the inventive concept. A control unit 20 usually comprising one-chip microprocessor controls the whole functions of a digital mobile station including the SMS function. A character input unit 50 consists of a keypad including a plurality of alphanumeric keys to generate key data representing the character information entered by the user. In addition, a touch screen may be provided to enter characters, consisting of a device for driving the touch screen and a character recognition device for converting the input data into the corresponding characters. A voice input device may also be employed to enter information by voice, including a voice signal processor for converting the input voice into the corresponding characters.

A memory device 70 consists of a volatile memory like RAM, and a nonvolatile memory such as flash memory and EEPROM to store the control program for controlling the whole functions of the digital mobile station, initial service data, SMS functional program, and the temporary data generated in its operation. Of course, the short messages edited or received are stored into the memory device 70. Each short message consists of organized character codes, and its length depends on the capacity of the memory device and the message frame specified by the service provider.

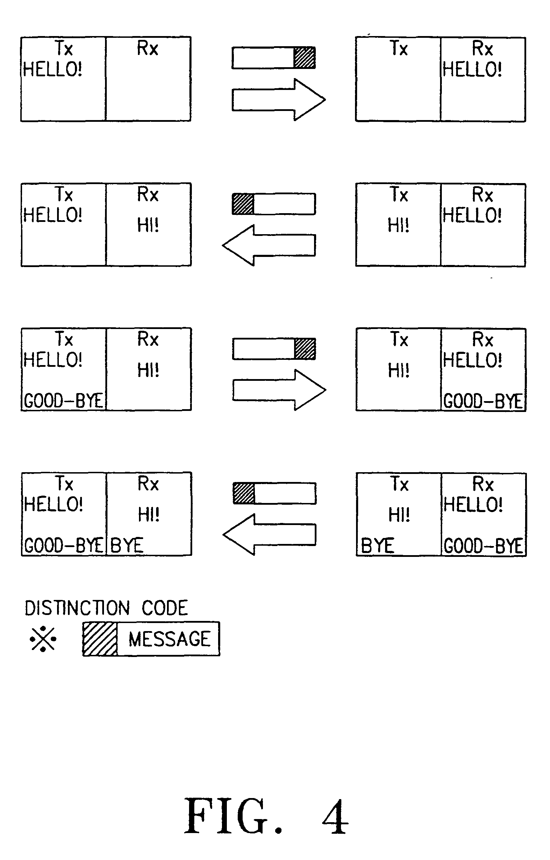

A display 60 usually comprises an LCD to display the characters and numbers entered by the user together with the operational states of the mobile station. The message screen of the display 60 is divided into sending and receiving message regions under the control of the control unit 20, as shown in Fig. 4, according to the present invention. An RF unit 10 enables radio signals to be exchanged between the mobile station and base station.

A distinction code generator 30 generates a distinction code added to a short message to distinguish it as a two-way dialogue short message. A distinction code detector 40 detects the distinction code from a received message to inform the control unit 20 of its detection. Thus, the receiving mobile station performs the two-way dialogue SMS function with the help of the distinction code detector 40.

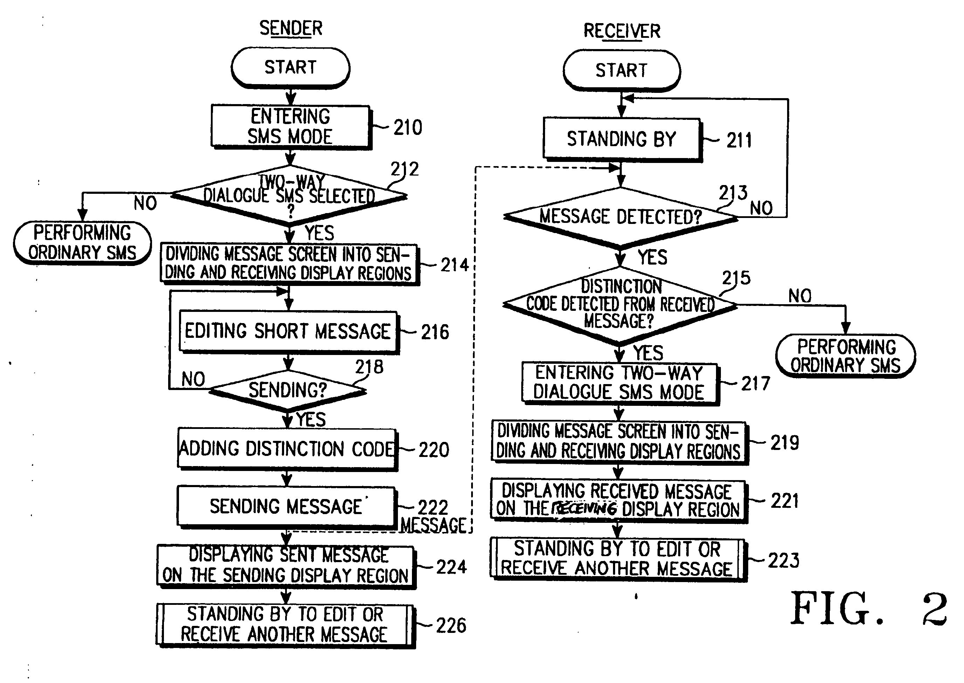

Describing the procedure of reciprocating short messages between the sender and receiver in real time in connection with Fig. 2, the sender enters the SMS mode in step 210. Then, at decision 212, it is determined whether it has selected the two-way dialogue SMS. If so, the message screen of the display is divided into the sending and receiving display regions. However, if not so at decision 212, the ordinary one-way SMS is performed. An example of the message screen divided into the sending and receiving display regions is schematically shown in Fig. 4. Namely, the message sent is displayed on the sending display region, and the message received on the receiving display region. This may be accomplished with the help of the distinction code contained in the message sent or received.

The user edits a short message through the character input unit in step 216. The distinction code generator 30 generates the distinction code added to the edited message in step 220 if there has been generated a start signal for sending the message to a receiver selected at decision 218. In step 222, the message is sent through air to the receiver. Then, the message sent is displayed on the sending display region of the message screen in step 224. Finally, the mobile station stands by to edit or receive another message.

Meanwhile, if the receiving mobile station, which stands by in step 211, detects the message at decision 213, it is determined at decision 215 whether the received message contains the distinction code. If so, it starts the two-way dialogue SMS mode in step 217, so that the message screen is divided into the sending and receiving display regions in step 219 to display the received message on the receiving display region in step 221, as shown in Fig. 4. Finally, it stands by to edit or receive another message in step 223, as in step 226.

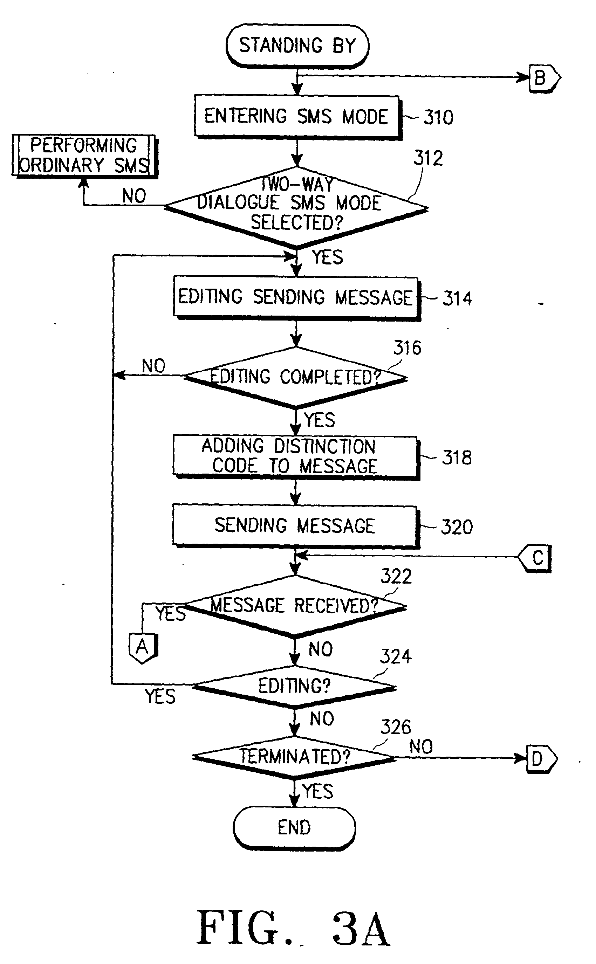

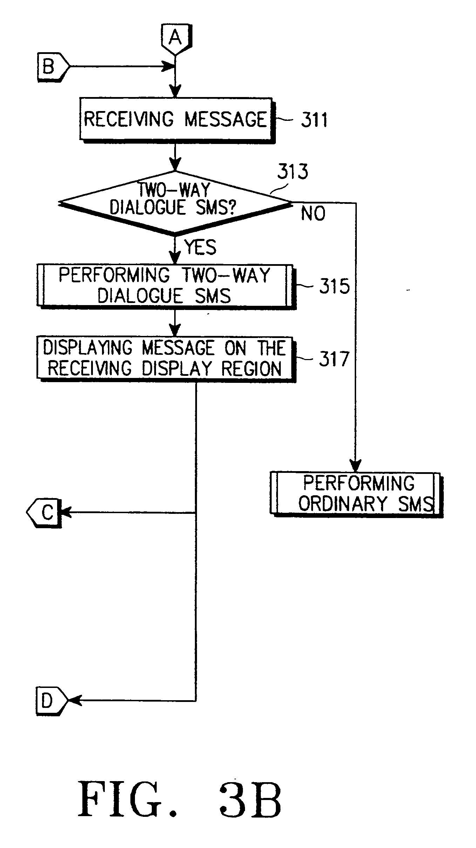

Alternatively, referring to Fig. 3, the mobile station enters the SMS mode on the demand of the user in step 310. Meanwhile, step 311 is to receive a message. At decision 312, it determined whether the two-way dialogue SMS mode is selected. If so, the message screen is divided into the sending and receiving display regions, as shown in Fig. 4, so that the sending display region may be used to edit a message. However, if not so in step 312, the ordinary SMS mode is performed. If the edition of the message is determined completed at decision 316, it is added with the distinction code to distinguish it as the two-way dialogue short message. Finally, in step 320, the message is sent through air to the receiving mobile station, and the mobile station stands by. Of course, the message sent is displayed on the sending display region.

The subsequent step 322 is the same as the step 311 to receive a message. At decision 313, it is determined whether the received message pertains to the two-way dialogue SMS. If so, the two-way dialogue SMS mode is performed in step 315 as in step 217 of Fig. 2, so that the receiving display region of the message screen displays the received message in step 317. Then, the process returns to step 322. If there is received no message in step 322, it is determined at decision 324 whether the user demands the edition of another message. This enables the sender and receiver to continuously reciprocate short messages. If so, the process returns to step 314. However, if not so, it is determined at decision 326 whether the end key is entered to terminate the two-way SMS service function. Of course, the sending or receiving of a message may be performed continuously twice. When a message is received during editing another message to be sent, the edited message may be temporarily stored in order to deal with the received message.

The distinction code to distinguish a two-way dialogue short message may be replaced by a phone number designated by the user. In addition, the two-way dialogue SMS makes the receiving display region display only the content of the received message without indicating the received time and the name of the sender as in the ordinary SMS. Fig. 4 schematically shows the two-way dialogue messages displayed on the sending and receiving display regions of the message screens of two mobile stations provided with the two-way dialogue SMS. Thus, the inventive apparatus enables both the sender and receiver to reciprocate short messages in the duplex mode, thereby enhancing the usability of the mobile station.

## Claims

1. An apparatus for controlling the SMS of a digital mobile station, comprising:
a display (60) having a message screen divided into sending and receiving message display regions; and
a control unit (20) for causing a sent message containing a predefined distinction message to be displayed on the sending message display region, and a received message to be displayed on the receiving message display region if the distinction message is detected from said received message.

2. The apparatus as defined in Claim 1, wherein said pre-defined distinction message consists of a pre-designated phone number or code.

3. The apparatus as defined in Claim 1, wherein said pre-defined distinction message represents a distinction code.

4. The apparatus as defined in Claim 3, further comprising:
a distinction code generator (30) for generating said distinction code added to the sending message; and
a distinction code detector (40) for detecting said distinction code from the received message.

5. The apparatus of one of claims 1 to 4, wherein the message screen is divided in response to a signal for starting a two-way dialogue SMS.

6. The apparatus as defined in one of Claims 1 to 5, wherein the displayed received message is user data.

7. A method for controlling the SMS of a digital mobile station having a display (60) with a message screen to display a received message, comprising the steps of:
detecting (215) a predefined distinction message from said received message;
dividing (219) said message screen into different display regions if said distinction message is detected;
displaying said received message on a selected one of said different display regions.

8. The method as defined in Claim 7, wherein said different display regions represent receiving and sending message display regions.

9. A method for controlling the transmission in the SMS of a digital mobile station having a display with a message screen, comprising the steps of:
dividing (214) said message screen into at least two display regions in response to a signal for starting a two-way dialogue SMS;
displaying an edited message on a selected one of said at least two display regions; and
sending (222; 320) said edited message with a distinction code in response to a send signal.

10. The method as defined in Claim 9, wherein said at least two display regions represent sending and receiving message display regions.

11. The method as defined in Claim 9 or 10, wherein the step of sending said edited message is followed by the subsequent step of editing (314) or receiving (311) another message.

12. The method as defined in Claim 7 or 8, further comprising the step of entering a two-way dialogue SMS mode to divide said message screen.

13. The method as defined in Claim 12, wherein the step of displaying said received message is followed by the subsequent step of editing (314) or receiving (311) another message.

## Patentansprüche

1. Vorrichtung zum Steuern des Kurznachrichtendienstes (SMS) einer digitalen Mobilstation, die umfasst:
eine Anzeigeeinrichtung (60) mit einem Nachrichten-Bildschirm, der in einen Sende-und einen Empfangs-Nachrichtenanzeigebereich unterteilt ist; und
eine Steuereinheit (20), die bewirkt, dass eine gesendete Nachricht, die eine vordefinierte Unterscheidungsnachricht enthält, in dem Sendenachrichten-Anzeigebereich angezeigt wird, und, dass eine empfangene Nachricht in dem Empfangs-NachrichtenAnzeigebereich angezeigt wird, wenn die Unterscheidungsnachricht aus der empfangenen Nachricht erfasst wird.

2. Vorrichtung nach Anspruch 1, wobei die vordefinierte Unterscheidungsnachricht aus einer vorbestimmten Telefonnummer oder einem vorbestimmten Code besteht.

3. Vorrichtung nach Anspruch 1, wobei die vordefinierte Unterscheidungsnachricht einen Unterscheidungscode darstellt.

4. Vorrichtung nach Anspruch 3, die des Weiteren umfasst:
eine Unterscheidungscode-Erzeugungseinrichtung (30), die den Unterscheidungscode erzeugt, der zu der Sendenachricht hinzugefügt wird; und
einen Unterscheidungscode-Detektor (40), der den Unterscheidungscode aus der empfangenen Nachricht erfasst.

5. Vorrichtung nach einem der Ansprüche 1 bis 4, wobei der Nachrichten-Bildschirm in Reaktion auf ein Signal zum Beginnen eines Zweiweg-Dialog-SMS unterteilt wird.

6. Vorrichtung nach einem der Ansprüche 1 bis 5, wobei es sich bei der angezeigten empfangenen Nachricht um Benutzerdaten handelt.

7. Verfahren zum Steuern des Kurznachrichtendienstes (SMS) einer digitalen Mobilstation, die eine Anzeigeeinrichtung (60) mit einem Nachrichten-Bildschirm zum Anzeigen einer empfangenen Nachricht hat, wobei es die folgenden Schritte umfasst:
Erfassen (215) einer vordefinierten Unterscheidungsnachricht aus der empfangenen Nachricht;
Unterteilen (219) des Nachrichten-Bildschirm in verschiedene Anzeigebereiche, wenn die Unterscheidungsnachricht erfasst wird;
Anzeigen der empfangenen Nachricht in einem ausgewählten der verschiedenen Anzeigebereiche.

8. Verfahren nach Anspruch 7, wobei die verschiedenen Anzeigebereiche Empfangs-und Sende-Nachrichten-Anzeigebereiche darstellen.

9. Verfahren zum Steuern des Sendens in dem Kurznachrichtendienst einer digitalen Mobilstation, die eine Anzeigeeinrichtung mit einem Nachrichten-Bildschirm hat, wobei es die folgenden Schritte umfasst:
Unterteilen (214) des Nachrichten-Bildschirm in wenigstens zwei Anzeigebereiche in Reaktion auf ein Signal zum Beginnen eines Zweiweg-Dialog-SMS;
Anzeigen einer editierten Nachricht in einem ausgewählten der wenigstens zwei Anzeigebereiche; und
Senden (222, 320) der editierten Nachricht mit einem Unterscheidungscode in Reaktion auf ein Sende-Signal.

10. Verfahren nach Anspruch 9, wobei die wenigstens zwei Anzeigebereiche Sende- und Empfangs-Nachrichten-Anzeigebereiche darstellen.

11. Verfahren nach Anspruch 9 oder 10, wobei auf den Schritt des Sendens der editierten Nachricht der anschließende Schritt des Editierens (314) oder Empfangens (311) einer weiteren Nachricht folgt.

12. Verfahren nach Anspruch 7 oder 8, das des Weiteren den Schritt des Eintretens in einen Zweiweg-Dialog-SMS-Modus zum Unterteilen des Nachrichten-Bildschirms umfasst.

13. Verfahren nach Anspruch 12, wobei auf den Schritt des Anzeigens der empfangenen Nachricht der anschließende Schritt des Editierens (314) oder Empfangens (311) einer weiteren Nachricht folgt.

## Revendications

1. Appareil pour commander le service des messages courts (SMS) d'une station mobile numérique, comportant :
un afficheur (60) ayant un écran d'affichage de messages divisé en régions d'affichage de messages d'envoi et de réception ; et
une unité de commande (20) destinée à provoquer l'affichage, sur la région d'affichage de message d'envoi, d'un message envoyé contenant un message de distinction prédéfini et, sur la région d'affichage de message de réception, un message reçu si le message de distinction est détecté à partir dudit message reçu.

2. Appareil selon la revendication 1, dans lequel ledit message de distinction prédéfini consiste en un code ou nombre de téléphone préalablement désigné.

3. Appareil selon la revendication 1, dans lequel ledit message de distinction prédéfini représente un code de distinction.

4. Appareil selon la revendication 3, comportant en outre :
un générateur (30) de code de distinction destiné à générer ledit code de distinction ajouté au message d'envoi; et
un détecteur (40) de code de distinction destiné à détecter ledit code de distinction à partir du message reçu.

5. Appareil selon l'une des revendications 1 à 4, dans lequel l'écran d'affichage de messages est divisé en réponse à un signal pour amorcer un SMS de dialogue bilatéral.

6. Appareil selon l'une des revendications 1 à 5, dans lequel le message reçu affiché est une donnée d'utilisateur.

7. Procédé de commande du service de messages courts SMS d'une station mobile numérique ayant un afficheur (60) pourvu d'un écran d'affichage de message destiné à afficher un message reçu, comprenant les étapes qui consistent :
à détecter (215) un message de distinction prédéfini à partir dudit message reçu ;
à diviser (219) ledit écran d'affichage de message en différentes régions d'affichage si ledit message de distinction est détecté ;
à afficher ledit message reçu sur l'une, sélectionnée, desdites différentes régions d'affichage.

8. Procédé selon la revendication 7, dans lequel lesdites différentes régions d'affichage représentent des régions d'affichage de messages de réception et d'envoi.

9. Procédé de commande de la transmission dans le service de messages courts SMS d'une station mobile numérique ayant un afficheur pourvu d'un écran d'affichage de messages, comprenant les étapes qui consistent :
à diviser (214) ledit écran d'affichage de messages en au moins deux régions d'affichage en réponse à un signal pour amorcer un SMS de dialogue bilatéral ;
à afficher un message édité sur l'une, sélectionnée, desdites au moins deux régions d'affichage ; et
à envoyer (222 ; 320) ledit message édité avec un code de distinction en réponse à un signal d'envoi.

10. Procédé selon la revendication 9, dans lequel lesdites, au moins deux, régions d'affichage représentent des régions d'affichage de messages d'envoi et de réception.

11. Procédé selon la revendication 9 ou 10, dans lequel l'étape d'envoi dudit message édité est suivie de l'étape subséquente d'édition (314) ou de réception (311) d'un autre message.

12. Procédé selon la revendication 7 ou 8, comprenant en outre l'étape d'entrée d'un mode SMS de dialogue bilatéral pour diviser ledit écran d'affichage de messages.

13. Procédé selon la revendication 12, dans lequel l'étape d'affichage dudit message reçu est suivie de l'étape subséquente d'édition (314) ou de réception (311) d'un autre message.
